# EUROPÄISCHE PATENTSCHRIFT

(11) **EP 1 578 888 B1**
(45) Veröffentlichungstag und Bekanntmachung des Hinweises auf die Patenterteilung: **09.03.2011**
(21) Anmeldenummer: 03767759.8
(22) Anmeldetag: 06.12.2003
(51) Int. Cl.: C09K 11/77, G07D 7/00, C07F 9/40

(54) **HERSTELLUNG UND VERWENDUNG VON IN-SITU-MODIFIZIERTEN NANOPARTIKELN**
PRODUCTION AND USE OF IN SITU-MODIFIED NANOPARTICLES
PRODUCTION ET UTILISATION DE NANOPARTICULES MODIFIEES IN SITU

(30) Priorität: 20.12.2002 DE 10259935
(43) Veröffentlichungstag der Anmeldung: 28.09.2005
(73) Patentinhaber: Bayer Technology Services GmbH, 51368 Leverkusen (DE)
(72) Erfinder: KÖHLER, Burkhard, 51373 Leverkusen (DE); BOHMANN, Kerstin, 50670 Köln (DE); HOHEISEL, Werner, 51061 Köln (DE); HAASE, Markus, 22457 Hamburg (DE); HAUBOLD, Stephan c/o Hanosolutions GmbH, 22525 Hamburg (DE); MEYER, Christiane, 20357 Hamburg (DE); HEIDELBERG, Thorsten, 22525 Hamburg (DE)
(86) Internationale Anmeldenummer: PCT/EP2003/013816
(87) Internationale Veröffentlichungsnummer: WO 2004/058914

(56) Entgegenhaltungen:
- EP-A- 0 672 673
- WO-A-02/20696
- ANON.: "Derivatives of aminomethylphosphonic acid" , RESEARCH DISCLOSURE (1979), 177, 50-2 (NO. 17751) XP002277288 Verbindung XI

## Beschreibung

Die vorliegende Erfindung betrifft Iminobis(methylenphosphono)-carbonsäurepentaalkylester als Modifizierungsreagenz bei der Synthese von Metallsalznanopartikeln, Verfahren zur Synthese von Metallsalznanopartikeln unter Verwendung eines Iminobis(methylenphosphono)carbonsäurepentaalkylesters, die nach dem erfindungsgemäßen Verfahren synthetisierten Metallsalznanopartikel und ihre Verwendung zur Ankopplung an biologisch relevante Moleküle zum Zwecke deren Kennzeichnung.

Metallsalznanopartikel im Sinne der vorliegenden Erfindung weisen ein Kristallgitter oder im Falle einer Dotierung ein Wirtsgitter auf, dessen Kation ein Metall, insbesondere ein Metall der dritten Nebengruppe des Periodensystems, beispielsweise Lanthan oder ein Metall der 2. Hauptgruppe ist, oder ein Seltenerdmetall und dessen Anion, etwa PO₄³⁻, SO₄²⁻ oder VO₄³⁻, aus einer geeigneten Anionquelle gewonnen wird, beispielsweise einer freien Säure der Salze der jeweils herzustellenden Nanopartikel, etwa Lanthanphosphat-, Bariumsulfat- oder Natriumvanadat-Nanopartikel.

Die Herstellung solcher Nanopartikel oder Nanoteilchen erfolgt meist durch Bildung von Nukleationskeimen und anschließendem kristallinen Wachstum der Teilchen meist unter Anwesenheit von koordinierenden Molekülen bzw. Liganden. Diese begrenzen das Wachstum der Teilchen auf eine Größe von unter 10 oder einigen 10 nm und wirken stabilisierend auf die Teilchen. Die Synthese erfolgt oft in hochsiedenden, organischen Lösemitteln, wie es beispielsweise in der internationalen Patentanmeldung WO 02/20 696 offenbart ist, und auf die zum Zwecke der Offenbarung der grundsätzlichen Flüssigphasensynthese von Nanopartikeln zurückgegriffen werden kann. Als weitere Beispiele hierfür gelten beispielsweise die Synthese von:
- Halbleiter-Quantum-Dots unter Verwendung von Trioktylphosphin bzw. Trioktylphosphinoxid (TOP/TOPO) (veröffentlicht in: C.B. Murray, D.J. Norris, M.G. Bawendi, J. Am. Chem. Soc. 115, 1993, 8706 ff.)
- Metallkolloiden unter Verwendung von Phosphin- und Chlorid-Liganden (z.B. Au₅₅(PPh3)₁₂C₁₆) oder von Thiol-Liganden (z.B. Au₆₄(SR)₃₄) (beispielsweise veröffentlicht in: G. Schmid, R. Pfeil, R. Boese, F. Bandermann, S. Meyer, G. H. M. Calis, J. W. A. van der Velden, Chem. Ber., 114, 1981, 3634 ff.)
- dotierten oder undotierten anorganischen Nanoteilchen, die auch fluoreszierende und/oder magnetische (para-, ferro-, antiferro-, ferrimagnetische) Eigenschaften aufweisen. (veröffentlicht in: K. Riwotzki, H. Meyssamy, A. Kornowski, M. Haase; J. Phys. Chem. B 104, 2000, 2824 ff.; WO 02/20695; DE 10111321)

Die aus den oben genannten Syntheseverfahren gewonnenen Nanopartikel sollen allerdings in vielen Fällen für bestimmte Anwendungszwecke oder Verwendungen, wie etwa Ankopplung an biologisch relevante Moleküle für die medizinische Diagnostik, Herstellung von Spezialtinten, beispielsweise Sicherheitstinten mit speziell gewählten Eigenschaften, Herstellung von Farben, Lacken, Einbettung in Glasfasern und Kunststoffen für die Kommunikationstechnologie, Verwendung als Katalysator, Einbettung in Flüssigkeiten für die weitere Beschichtung von Gegenständen zum Zwecke von Korrosionsschutz, Oberflächenveredelung oder speziell gewählter Oberflächenfunktionalisierung, weiter verwendet werden können.

Dabei ist es meist notwendig, die fertig synthetisierten Nanopartikel in einer neuen Umgebung zu dispergieren, die dann für diese Anwendung typisch ist, beispielsweise eine spezielle organische Matrix, oder ein perfluoriertes Lösungsmittel, oder sie sollen zur direkten Ankopplung an biologisch relevante Moleküle verwendet werden, wenn sie etwa als Biolabel eingesetzt werden sollen.

Nachteilig an den Syntheseverfahren aus dem o.g. Stand der Technik ist für eine solche Weiterverwendung der Nanopartikel der oft stark hydrophobe Charakter der so synthetisierten Teilchen, der z.B. durch Alkylketten verursacht wird, die von der Teilchenoberfläche nach außen ragen. Das Fehlen von geeigneten reaktiven Gruppen gibt diesen Teilchen einen relativ inerten Charakter. Diese Eigenschaften werden hervorgerufen durch die Verwendung koordinierender Moleküle, wie z.B. Trisethylhexylphosphat, Tributylphosphat oder Trioktylphosphin, aus denen das Lösemittel entweder direkt zusammengesetzt ist, oder die als Zusatz zu einem geeigneten Lösemittel zugegeben wurden.

Diese koordinierenden Moleküle bilden eine organische Hülle um die Nanoteilchen und wirken auch als Stabilisator gegen Agglomeration. Durch den Mangel an reaktiven Gruppen an der Außenseite dieser organischen Hülle der Nanoteilchen sind die Möglichkeiten, weitere Moleküle an die Teilchenoberfläche oder an diese Hülle direkt anzukoppeln, weitgehend eingeschränkt.

Eine solche Ankopplung funktioneller Moleküle an die Teilchen ist jedoch meist notwendig, um die Nanoteilchen in organische Matrizen wie z.B. Polymere bzw. Lacke oder andere Trägerflüssigkeiten für die oben genannten weiteren Verwendungen einzuarbeiten. Für die oben genannte Verwendung dieser Teilchen als biologische Marker ist eine Ankopplung der Nanopartikel an spezielle Biomoleküle, wie z.B. Antikörper, Proteine, Haptene, Nukleinsäuren, etc. notwendig. Der Einsatz von Markern in biologischen Systemen zur Kennzeichnung oder Verfolgung spezifischer Substanzen ist seit Jahrzehnten ein etabliertes Instrument in der medizinischen Diagnostik und biotechnologischen Forschung.

Nanopartikel können beispielsweise für biologische Assays mit unterschiedlichsten relevanten Biomolekülen gekoppelt werden und z.B. zum qualitativen oder quantitativen Nachweis eines biologischen Zielmoleküls in einem homogenen, heterogenen oder kompetetiven Assay eingesetzt werden. Dabei können sowohl die angekoppelten Biomoleküle als auch die nachzuweisenden Zielmoleküle z.B. monoklonale oder polyklonale Antikörper, Proteine, Peptide, Oligonukleotide, Nukleinsäuren, nukleinsäureähnliche Moleküle wie Peptide Nucleic Acids (PNAs) oder Morpholinos, Oligo- oder Polysaccharide, Haptene oder niedermolekulare synthetische oder natürliche Antigene sein.

Um diese Einarbeitung oder Ankopplung durchzuführen, müssen die Teilchen entsprechend behandelt werden. Hierzu gehört gegebenenfalls die zumindest teilweise Entfernung der koordinierenden Moleküle von der Teilchenoberfläche und die in einem dann nachfolgenden Arbeitsschritt durchzuführende Ankopplung von je nach Verwendung spezifischen, vorgegebenen reaktiven Gruppen. Diese weiteren Verfahrensschritte erfordern in nachteilhafter Weise zusätzlichen Arbeitsaufwand und vermindern die Ausbeute an Nanopartikeln, die für die spätere Verwendung effektive gebraucht werden können. Dadurch ist die speziell angepasste Bereitstellung von Nanopartikeln an die jeweilige spätere Verwendung relativ teuer und uneffizient.

Die WO 02/20 696 offenbart als Wachstumssteuerkomponente bei der Flüssigphasensynthese verschiedene phosphororganische Verbindungen, die aber nur im Hinblick auf die gezielte Wachstumssteuerung der zu synthetisierenden Nanopartikel selbst bestimmte funktionale Gruppen tragen können. Diese Substanzen sind daher so gewählt, dass sie gut an das Nanopartikel anlagern können und andererseits das weitere Gitterwachstum verhindern. Beispielhaft genannt sind Phosphinsäureester, Phosphonsäurediester, Trialkylphosphane und andere. Damit gelingt zwar die Synthese der Nanopartikel mit einer engen Größenverteilung, es wird jedoch kein Beitrag zur Vereinfachung der oben genannten Funktionalisierung der Nanopartikel im Hinblick auf die spätere, nachsynthetische Verwendung der Nanopartikel geleistet.

Es ist daher die Aufgabe der vorliegenden Erfindung, die Flüssigsyntheseverfahren für Nanopartikel im Hinblick auf ihre spätere Verwendung zu vereinfachen.

Die Gegenstände mit den Merkmalen der unabhängigen Ansprüche lösen diese Auf gabe. In den jeweiligen Unteransprüchen finden sich vorteilhafte Weiterbildungen und Verbesserungen des jeweiligen Gegenstandes der Erfindung.

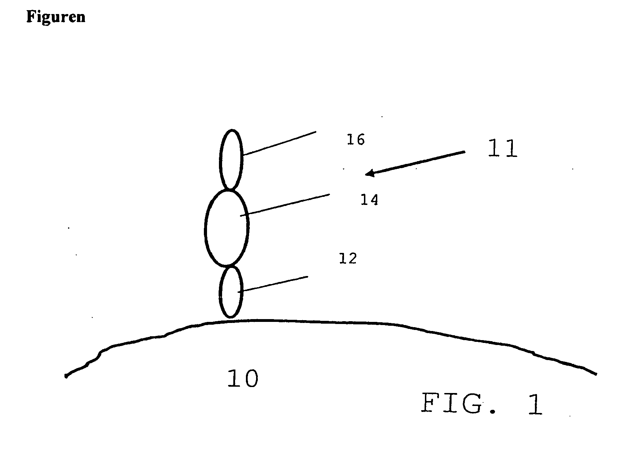

Erfindungsgemäß wird die Zugabe eines Modifizierungsreagenz zur Synthesemischung vorgeschlagen, das sich mit einer ersten funktionalen Gruppe an die Nanopartikeloberfläche anlagert und eine zweite funktionale Gruppe zur Bindung an je nach späterer Verwendung der Nanopartikel spezifisch ausgewählte Moleküle trägt. Somit entfällt ein postsynthetischer, separater anwendungsspezifischer Modifikationsschritt. Dabei steht ein Spacermolekül 14 (Fig. 1) zur Verfügung, das die beiden funktionalen Gruppen weit genug voneinander beabstandet trägt. Eine neue Substanzklasse, die Iminobis(methylenphosphono)carbonsäurepentaalkylester sind dafür besonders geeignet. Die besondere Leistung dieser Modifizierungsreagenzien besteht vor allem darin, dass sie das Wachstum der Nanopartikel gezielt gesteuert zulassen und gleichzeitig während der Synthese (in-situ) die Oberfläche der wachsenden Nanopartikel so modifizieren, dass die Teilchen sich sehr gut in einer Vielzahl von Lösungsmitteln lösen lassen, wodurch die Teilchen nach ihrer Synthese gleich eine gewisse Allround-Brauchbarkeit für Dispergierung in diversen Lösungsmitteln besitzen, etwa für Chloroform, Toluol, Hexan, Alkohole, besonders Isopropanol und Wasser. Dieser Vorteil kommt besonders für solche Nanopartikel zum Tragen, deren Oberfläche nach der Synthese relativ arm mit Molekülen versehen ist, die von sich aus geeignet sind, eine brauchbare Lösbarkeit in entsprechenden Lösungsmitteln zu gewährleisten.

Ein erfinderisches Kernmerkmal besteht darin, dass das erfindungsgemäße Modifizierungsreagenz zwei verschiedene Typen von funktionalen Gruppen hat, wobei einer spezifisch für die Kopplung zum Nanopartikel, und der andere spezifisch für eine Kopplung speziell für die spätere Verwendung der Nanopartikel ausgewählt ist, wobei das Reagenz bereits während der Synthese der Nanopartikel zum Einsatz kommt.

Die vorliegende Erfindung beruht damit auf dem Prinzip, dass die Nanopartikel gleich während ihrer Synthese an ihren Oberflächen mit den Modifizierungsreagenzien in Verbindung kommen, die eine oberflächenmodifizierende "Außenwirkung" besitzen. Durch diese erfindungsgemäß vorgesehene, vom Nanopartikel weg gerichtete Außenwirkung wird bewirkt, dass sich Moleküle, die typisch sind für die nachsynthetische Verwendung der Nanopartikel, leicht anlagern oder ankoppeln können. Es werden also bereits während der Synthese Kopplungsstellen für die spätere Verwendung geschaffen, um beispielsweise eine leichte Dispergierbarkeit in einem bestimmten Medium zu schaffen, etwa einem speziellen Lösungsmittel, oder um Biomoleküle daran anzukoppeln. Dabei kann die Stärke der entstehenden Bindung je nach späterer Verwendung gezielt ausgewählt werden.

In vorteilhafter Weise haben die Modifizierungsreagenzien darüber hinaus zum Teil gleichzeitig noch eine weitere Funktion: Sie wirken durch ihre zum Nanopartikel gerichtete "Innenwirkung", wie im Stand der Technik beschrieben, als Wachstumssteuerkomponente.

Erfindungsgemäß werden also bereits bei der Synthese der Teilchen durch Zugabe der Modifizierungsreagenzien geeignete reaktive Gruppen (Estergruppen) in die Teilchenoberfläche eingearbeitet. Diese reaktiven Gruppen können dann für die Herstellung einer stabilen Bindung dienen, jeweils zwischen den Nanoteilchen und organischen Matrizen (z. B. Polymere, Lacke etc.), bzw. biologisch relevanten Molekülen wie z.B. Proteinen, Peptiden, Oligonukleotiden oder anderen Nukleinsäuremolekülen oder nukleinsäureähnliche Moleküle, wie PNAs oder Morpholinos, Oligo- oder Polysacchariden, Haptenen, wie Biotin oder Digoxin oder niedermolekularen synthetischen oder natürlichen Antigenen oder Epitopen.

Bevorzugt werden die genannten Modifizierungsreagenzien bei der Synthese von Nanopartikeln eingesetzt, deren Wirtsmaterial mit Fremdionen dotiert ist und nachfolgend als lumineszierende anorganische dotierte Nanoteilchen (lad-Nanoteilchen) bezeichnet werden.

Die Dotierung kann dabei stöchiometrisch oder nicht stöchiometrisch sein. Hierunter zählen insbesondere Materialien und Materialklassen, die als sogenannte Phosphore in Leuchtschirmen oder Fluoreszenzlampen Verwendung finden, wie sie zum Beispiel in Ullmann's Encyclopedia of Industrial Chemistry, WILEY-VCH, 6th edition, 2002 Electronic Release, Kapitel "Luminescent Materials: 1. Inorganic Phosphors" genannt sind. In diesen Materialien dienen die Fremdionen als Aktivatoren für die Emission von Fluoreszenzlicht nach Anregung durch UV-, sichtbares oder IR-Licht, Röntgen- oder Gammastrahlen oder Elektronenstrahlen. Bei einigen Materialien werden auch mehrere Sorten von Fremdionen in das Wirtsmaterial eingebaut, um einerseits Aktivatoren für die Emission zu erzeugen und um andererseits die Anregung des Teilchensystems effizienter zu gestalten oder um die Absorptionswellenlänge durch Verschiebung an die Wellenlänge einer gegebenen Anregungslichtquelle anzupassen (sogenannte Sensitizer). Der Einbau mehrerer Sorten von Fremdionen kann auch dazu dienen, gezielt eine bestimmte Kombination von Fluoreszenzbanden, die von einem Teilchen emittiert werden sollen, einzustellen.

Das Wirtsmaterial der lad-Nanoteilchen besteht vorzugsweise aus Verbindungen des Typs XY. Dabei ist X ein Kation aus Elementen der Hauptgruppen 1a, 2a, 3a, 4a, der Nebengruppen 2b, 3b, 4b, 5b, 6b, 7b oder der Lanthaniden des Periodensystems. In einigen Fällen kann X auch eine Kombination bzw. Mischung aus den genannten Elementen sein. Y kann ein mehratomiges Anion, enthaltend ein oder mehrere Element(e) der Hauptgruppen 3a, 4a, 5a, der Nebengruppen 3b, 4b, 5b, 6b, 7b und/oder 8b sowie Elemente der Hauptgruppen 6a und/oder 7a, sein. Y kann aber auch ein einatomiges Anion aus der Hauptgruppe 5a, 6a oder 7a des Periodensystems sein. Das Wirtsmaterial der lad-Nanoteilchen kann auch aus einem Element der Hauptgruppe 4a des Periodensystems bestehen. Als Dotierung können Elemente der Hauptgruppen 1a, 2a oder aus der Gruppe enthaltend Al, Cr, Tl, Mn, Ag, Cu, As, Nb, Nd, Ni, Ti, In, Sb, Ga, Si, Pb, Bi, Zn, Co und/oder Elemente der Lanthaniden dienen. Auch Kombinationen von zwei oder mehreren dieser Elemente können in unterschiedlichen relativen Konzentrationen zueinander als Dotierungsmaterial dienen. Die Konzentration des Dotierungsmaterials im Wirtsgitter beträgt zwischen 10⁻⁵ mol.-% und 50 mol.-%, bevorzugt zwischen 0,01 mol.-% und 30 mol.%, besonders bevorzugt zwischen 0,1 mol.% und 20 mol.-%.

Bevorzugt werden Sulfide, Selenide, Sulfoselenide, Oxysulfide, Borate, Aluminate, Gallate, Silikate, Germanate, Phosphate, Halophosphate, Oxide, Arsenate, Vanadate, Niobate, Tantalate, Sulfate, Phosphide, Wolframate, Molybdate, Alkalihalogenide sowie andere Halogenide oder Nitride als Wirtsmaterialien für die lad-Nanoteilchen verwendet. Beispiele für diese Materialklassen sind zusammen mit den entsprechenden Dotierungen in der folgenden Liste angegeben (Materialien des Typs B:A mit B = Wirtsmaterial und A = Dotierungsmaterial):
LiI:Eu; NaI:T1; CsI:T1; CsI:Na; LiF:Mg; LiF:Mg,Ti; LiF:Mg,Na; KMgF₃:Mn; Al₂O₃:Eu; BaFCI:Eu; BaFCl:Sm; BaFBr:Eu; BaFCl_{0,5}Br_{0,5}:Sm; BaY₂F₈:A (A = Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; BaMgAl₂O₃:Eu; Ba₂P₂O₇:Ti; (Ba,Zn,Mg)₃Si₂O₇:Pb; Ce(Mg,Ba)Al₁₁O₁₉; Ce_{0,65}Tb_{0,35}MgAl₁₁O₁₉:Ce,Tb; MgAl₁₁O₁₉:Ce,Tb; MgF₂:Mn; MgS:Eu; MgS:Ce; MgS:Sm; MgS:(Sm,Ce); (Mg,Ca)S:Eu; MgSiO₃:Mn; 3,5MgO·0,5MgF₂·GeO₂:Mn; MgWO₄:Sm; MgWO₄:Pb; 6MgO·As₂O₅:Mn; (Zn,Mg)F₂:Mn; (Zn₄Be)SO₄:Mn; Zn₂SiO₄:Mn; Zn₂SiO₄:Mn,As; ZnO:Zn; ZnO:Zn,Si,Ga; Zn₃(PO₄)₂:Mn; ZnS:A (A = Ag, Al, Cu); (Zn,Cd)S:A (A = Cu, Al, Ag, Ni); CdBO₄:Mn; CaF₂:Mn; CaF₂:Dy; CaS:A A = Lanthanide, Bi); (Ca,Sr)S:Bi; CaWO₄:Pb; CaWO₄:Sm; CaSO₄:A (A = Mn, Lanthanide); 3Ca₃(PO₄)₂-Ca(F,Cl)₂:Sb,Mₙ; CaSiO₃:Mn,Pb; Ca₂Al₂Si₂O₇:Ce; (Ca,Mg)SiO₃:Ce; (Ca,Mg)SiO₃:Ti; 2SrO·6(B₂O₃)·SrF₂:Eu; 3Sr₃(PO₄)_{2·}CaCl₂:Eu; A₃(PO₄)₂·ACl₂:Eu (A = Sr, Ca, Ba); (Sr,Mg)₂P₂O₇:Eu; (Sr,Mg)₃(PO₄)₂:Sn; SrS:Ce; SrS:Sm,Ce; SrS:Sm; SrS:Eu; SrS:Eu,Sm; SrS:Cu,Ag; Sr₂P₂O₇:Sn; Sr₂P₂O₇:Eu; Sr₄Al₁₄O₂₅:Eu; SrGa₂S₄:A (A = Lanthanide, Pb); SrGa₂S₄:Pb; Sr₃Gd₂Si₆O₁₈:Pb,Mn; YF₃:Yb,Er; YF₃:Ln (Ln = Lanthanide); YLiF₄:Ln (Ln = Lanthanide); Y₃Al₅O₁₂:Ln (Ln = Lanthanide); YAl₃(BO₄)₃:Nd,Yb; (Y,Ga)BO₃:Eu; (Y,Gd)BO₃:Eu; Y₂Al₃Ga₂O₁₂:Tb; Y₂SiO₅:Ln (Ln = Lanthanide); Y₂O₃:Ln (Ln = Lanthanide); Y₂O₂S:Ln (Ln = Lanthanide); YVO₄:A (A = Lanthanide, In); Y(P,V)O₄:Eu; YTaO₄:Nb; YAlO₃:A (A = Pr, Tm, Er, Ce); YOCl:Yb,Er; LnPO₄:Ce,Tb (Ln = Lanthanide oder Mischungen von Lanthaniden) ; LuVO₄:Eu; GdVO₄:Eu; Gd₂O₂S:Tb; GdMgB₅O₁₀:Ce,Tb; LaOBr:Tb; La₂O₂S:Tb; LaF₃:Nd,Ce; BaYb₂F₈:Eu; NaYF₄:Yb,Er; NaGdF₄:Yb,Er; NaLaF₄:Yb,Er; LaF₃:Yb,Er,Tm; BaYF₅:Yb,Er; Ga₂O₃:Dy; GaN:A (A = Pr, Eu, Er, Tm); Bi₄Ge₃O₁₂; LiNbO₃:Nd,Yb; LiNbO₃:Er; LiCaAlF₆:Ce; LiSrAlF₆:Ce; LiLuF₄:A (A = Pr, Tm, Er, Ce); Li2B4O₇:Mn, SiOₓ:Er,Al (0 ≤ x ≤ 2).

Besonders bevorzugt werden folgende Materialien verwendet: YVO₄:Eu, YVO₄:Sm, YVO₄:Dy, LaPO₄:Eu, LaPO₄:Ce, LaPO₄:Ce,Tb, CePO₄:Tb; ZnS:Tb, ZnS:TbF₃, ZnS:Eu, ZnS:EuF₃, Y₂O₃:Eu, Y₂O₂S:Eu, Y₂SiO₅:Eu, SiO₂:Dy, SiO₂:Al, Y₂O₃:Tb, CdS:Mn, ZnS:Tb, ZnS:Ag, ZnS:Cu. Unter den besonders bevorzugten Materialien werden insbesondere diejenigen ausgewählt, die eine kubische Gitterstruktur des Wirtsgitters besitzen, da bei diesen Materialien die Zahl der einzelnen Fluoreszenzbanden minimal wird. Beispiele hierfür sind: MgF₂:Mn; ZnS:Mn, ZnS:Ag, ZnS:Cu, CaSiO₃:Ln, CaS:Ln, CaO:Ln, ZnS:Ln, Y₂O₃:Ln, oder MgF₂:Ln (Ln = Lanthaniden). Die vorliegende Erfindung kann ebenso für Nanopartikel aus folgenden Substanzen bevorzugt eingesetzt werden, die alle auch zusätzlich noch mit einem oder mehreren Elementen der Lanthaniden und/oder Mn, Ag, Cu, Bi, Cr, Sn, Sb dotiert sein können.
1. Aus der Gruppe der Halogenide: zum Beispiel XY₂ (X = Mg, Ca, Sr, Ba; Y = F, Cl, I), CaF₂:Eu (II), BaF₂:Eu; BaMgF₄:Eu; LiBaF₃:Eu; SrF₂:Eu; SrBaF₂Eu; CaBr₂:Eu-SiO₂; CaCl₂:Eu; CaCl₂:Eu-SiO₂; CaCl₂:Eu,Mn-SiO₂; Cal₂₁Eu; Cal₂Eu,Mn; KMgF₃:Eu; SrF₂ :Eu (II), BaF₂:Eu (II), YF₃, NaYF₄,
2. Aus der Gruppe der Erdalkalisulfate: zum Beispiel XSO₄ (X = Mg, Ca, Sr, Ba), SrSO₄:Eu, SrS04:Eu,Mn, BaSO₄:Eu, BaSO₄:Eu,Mn, CaSO₄, CaSO₄:Eu, CaSO₄:Eu,Mn, sowie jeweils gemischte Erdalkalisulfate, auch in Kombination mit Magnesium, z.B. Ca,MgSO₄:Eu,Mn,
3. Aus der Gruppe der Phosphate und Halophosphate: zum Beispiel caPO₄:Ce,Mn, Ca₅(PO₄)₃Cl:Ce,Mn, Ca₅(PO₄)₃F:Ce,Mn, SrPO₄:Ce,Mn, Sr₅(PO₄)₃Cl:Ce,Mn, Srₛ(PO₄)₃F:Ce,Mn, dieses auch mit Eu (II) und Eu,Mn codotiert, α-Ca₃(PO₄)₂:Eu; β-Ca₃(PO₄)₂:Eu, Mn; Ca₅(PO₄)₃Cl:Eu; Sr₅(PO₄)₃Cl:Eu; Ba₁₀(PO₄)₆Cl:Eu; Ba₁₀(PO₄)₆Cl:Eu,Mn, Ca₂Ba₃(POₐ)₃Cl:Eu; Ca₅(PO₄)₃F:Eu²⁺X³⁺; Sr₅(PO₄)₃F:Eu²⁺X³⁺(X=Nd, Er, Ho, Tb); Ba₅(PO₄)₃Cl:Eu; β-Ca₃(PO₂)₂:Eu; CaB₂P₂O₉:Eu; CaB₂P₂O₉:Eu; Ca₂P₂O₇:Eu; Ca₂P₂O₇:Eu, Mn; Sr₁₀(PO₄)₆Cl₂:Eu; (Sr, Ca, Ba, Mg)₁₀(PO₄)₆Cl₂:Eu; LaPO₄:Ce; CePO₄
4. Aus der Gruppe der Borate: zum Beispiel LaBO₃; LaBO₃:Ce; ScBO₃:Ce YAlBO₃:Ce; YBO₃:Ce; Ca₂B₅O₉Cl:Eu; xEuO·yNa₂O·zB₂O₃
5. Aus der Gruppe der Vanadate: zum Beispiel YVO₄, YVO₄:Eu, YVO₄:Dy, YVO₄:Sm YVO₄:Bi; YVO₄:Bi,Eu, YVO₄:Bi,Dy, YVO₄:Bi,Sm, YVO₄:Tm, YVO₄:Bi,Tm GdVO₄, GdVO₄:Eu, GdVO₄:Dy, GdVO₄:Sm GdVO₄:Bi; GdVO₄:Bi,Eu, GdVO₄:Bi,Dy, GdVO₄:Bi,Sm
6. Aus der Gruppe der Aluminate: zum Beispiel MgAl₂O₄:Eu; CaAl₂O₄:Eu; SrAl₂O₄:Eu; BaAl₂O₄:Eu; LaMgAl₁₁O₁₉:Eu; BaMgAl₁₀O₁₇:Eu; BaMgAl₁₀O₁₇:Eu, Mn; CaAl₁₂O₁₉:Eu; SrAl₁₂O₁₉:Eu; SrMgAl₁₀O₁₇:Eu; Ba(Al₂O₃)₆:Eu; (Ba, Sr)MgAl₁₀O₁₇:Eu, Mn; CaAl₂O₄:Eu, Nd; SrAl₂O₄:Eu, Dy; Sr₄Al₁₄O₂₅:Eu, Dy.
7. Aus der Gruppe der Silikate: zum Beispiel BaSrMgSi₂O₇:Eu; Ba₂MgSiO₇:Eu; BaMg₂SiO₇:Eu; CaMgSi₂O₆:Eu; SrBaSiO₄:Eu; Sr₂Si₃O₈.SrCl₂:Eu; Ba₅SiO₄Br₆:Eu; Ba₅SiO₄Cl₆:Eu; Ca₂MgSi₂O₇:Eu; CaAl₂Si₂O₈:Eu; Ca_{1.5}Sr_{0.5}MgSi2O₇:Eu; (Ca, Sr)₂MgSiO₇:Eu, Sr₂LiSiO₄F:Eu.
8. Aus der Gruppe der Wolframate und Molybdate: zum Beispiel X₃WO₆ (X = Mg, Ca, Sr, Ba),, X₂WO₄ (X = Li, Na, K, Rb, Cs), XMoO₄ (X = Mg, Ca, Sr, Ba) sowie Polymolybdate oder Polywolframate bzw. die Salze der entsprechenden Hetero- oder Isopolysäuren.
9. Aus der Gruppe der Germanate: zum Beispiel Zn₂GeO₄
10. Aus folgender Gruppe: ALnO₂:Yb, Er (A = Li, Na; Ln = Gd, Y, Lu); Ln₂O₃:Yb, Er (Ln = La, Gd, Y, Lu); LnAO₄:Yb, Er (Ln = La, Y; A=P, V, As, Nb); Ca₃Al₂Ge₃O₁₂:Er; Gd₂O₂S:Yb, Er; La₂S:Yb, Er.

Die vorliegende Erfindung kann auch zur Synthese von oxidischen Nanopartikeln dienen, die via Fällungsreaktion hergestellt werden, wie z.B. CeO₂, Y₂O₃, ZnO, SnO₂, TiO₂, etc..

Die vorliegende Erfindung kann bevorzugt zur Synthese kristalliner Wirtsgitter der bisher beschriebenen Verbindungen dienen, sie schließt aber die Synthese amorpher oder teilkristalliner Formen der Teilchen nicht aus.

Nanoteilchen gemäß der vorliegenden Erfindung weisen eine Größe von 1 nm bis 1 µm, auf, die gezielt unter Verwendung der erfindungsgemäß vorgesehenen Modifizierungsreagenzien einstellbar ist, und lassen sich bis zur Größe von wenigen Nanometern (etwa 2 Nanometern) in enger Größenverteilung herstellen.

Die erfindungsgemäße Modifizierung der Oberfläche erfolgt während der Bildung der Nanopartikel - in situ Modifikation - im Gegensatz zu der nachsynthetischen Modifikation. Die erhaltenen Nanopartikel können daher direkt mit einer gewünschten chemischen Oberfläche in einem Schritt synthetisiert werden.

Die Kristallwachstumsgeschwindigkeiten und die resultierenden Partikeldurchmesser sind je nach Typ und chemischer Zusammensetzung des Wirtsgitters und Synthesebedingungen wie Lösungsmittel und Temperatur unterschiedlich groß. Durch den Zeitpunkt der Zugabe des Modifizierungsreagenzes zur Reaktionslösung kann die Größe der Partikel gezielt beeinflusst werden. Der Zeitpunkt der Zugabe des Modifizierungsreagenz während der Synthesezeitspanne ist umso später, je größer die geplante, durchschnittliche Größe der Nanopartikel ist.

Gitter, die eine schnelle Kristallbildung aufweisen und eher große Nanopartikel bilden (z.B. 20-30 nm), können durch eine direkte Zugabe des Modifizierungsreagenzes zur Reaktionslösung noch vor dem Aufheizen im Wachstum begrenzt werden, während bei Partikeltypen, die zu kleinen Durchmessern neigen, eine zeitverzögerte Zugabe zunächst das Kristallwachstum fortschreiten lässt.

Somit ist es durch die Wahl des Zeitpunktes, an dem das Modifizierungsreagenz erfindungsgemäß zur Synthesemischung gegeben wird, möglich, das Partikelwachstum zu steuern und damit gewünschte Partikelgrößen zusätzlich zu einer chemisch modifizierten Oberfläche zu erhalten.

Die Modifizierung der Oberfläche, also das gezielte Anbringen chemischer Gruppen, erlaubt eine Veränderung der Eigenschaften der Nanopartikel hinsichtlich ihrer Löslichkeit in organischen und anorganischen Lösungsmitteln unterschiedlichster Polarität. Auch das Einbringen in Kunststoffe, Lacke, Tinten und Polymere und die homogene Verteilung in diesen Matrices kann durch eine entsprechende Modifizierung erreicht werden. Zudem können durch die Anbringung funktioneller Gruppen Kopplungen mit weiteren Molekülen wie z.B. Biomolekülen erfolgen. Dadurch können die fluoreszierenden oder magnetischen Eigenschaften der Nanopartikel als Marker für biologische Anwendungen eingesetzt werden.

Durch die Modifizierung mit chemischen Verbindungen, die zwei Typen von funktionellen Gruppen tragen, kann zudem die Möglichkeit eines analytischen Nachweises der Oberflächenmodifizierung eingeführt werden, beispielsweise durch die IR-spektroskopisch empfindlich detektierbare Carbonylschwingung einer Carbonylfunktion.

Erfindungsgemäß wird als Modifizierungsreagenzien eine neue Substanzklasse verwendet, die Iminobis(methylenphosphono)carbonsäurepentaalkylester der Formel I 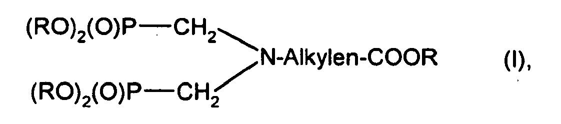 wobei
- R: einen C₁₋C₄-Alkylrest und
Alkylen einen C₁₋C₂₂-Alkylenrest oder C₇-C₂₀-Alkylenarylenrest, vorzugsweise einen C₅-C₁₇-Alkylenrest, der linear oder verzweigt sein kann und zusätzlich als weitere Substituenten Halogenatome, COOR-Gruppen, Alkoxygruppen, Bis(dialkoxyphosphorylmethyl)aminogruppen oder Arylreste tragen kann, darstellt.

Dabei koppeln die Phosphatgruppen an die Oberfläche, sind im obigen Sinne nach innen gerichtet, und die Carbonsäure- bzw. -esterfunktion sind nach außen gerichtet.

Ein Weg, diese oben genannte neue Substanzklasse herzustellen, ist wie folgt gegeben:

Ein Verfahren zur erfindungsgemäßen Herstellung der Iminobis(methylenphosphono)carbonsäurepentaalkylester, dadurch gekennzeichnet, dass man Verbindungen der Formel II 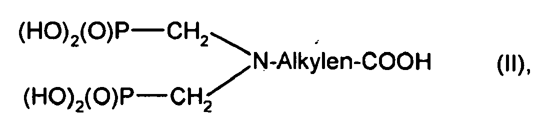 wobei Alkylen die oben angegebene Bedeutung hat,
mit Orthoesters der Formel III

(RO)₃C-X (III),

wobei
- R: die oben zu Formel (I) angegebene Bedeutung hat und
- X: für ein Wasserstoffatom, einen C₁-C₄-Alkylrest oder für einen Phenylrest, vorzugsweise für Wasserstoff, steht,
bei Temperaturen von 60-200°C umsetzt.

Verbindungen der Formel II sind zugänglich durch Reaktion von Aminosäuren mit bezogen auf die Aminogruppe 2-3 Molen Formaldehyd und 2-3 Molen Phosphoriger Säure.

Als Aminosäuren können in diese Reaktion eingesetzt werden: Glycin, Alanin, Leucin, Glutaminsäure, Asparaginsäure, Lysin, Valin, Phenylalanin, beta-Alanin, 4-Aminobuttersäure, 6-Aminocapronsäure, 11-Aminoundecansäure, 7-Aminoheptansäure, 8-Aminooctansäure, 12-Aminododecansäure und 4-Aminomethylbenzoesäure, vorzugsweise 11-Aminoundecansäure und 6-Aminocapronsäure.

Als Verbindungen der Formel III können eingesetzt werden die Trimethyl- Triethyl, Tripropyl-, Triisopropyl und Tributylester der Orthoameisensäure, Orthoessigsäure und der Orthobenzoesäure, vorzugsweise Orthoameisensäure.

Die Reaktion findet bei 60°C bis 200°C statt. In einer bevorzugten Ausführungsform werden Orthoameisensäuretrialkylester bei ihrer Siedetemperatur eingesetzt. Die Reaktion findet in Gegenwart oder Abwesenheit, vorzugsweise in Abwesenheit von Lösungsmitteln statt. Es werden mindestens für jede Phosphorylgruppe im Edukt zwei Mol und für jede Carboxylgruppe ein Mol Orthoester eingesetzt. Nach der Reaktion werden nicht umgesetzte Edukte abfiltriert und der Überschuss an Orthoester abdestilliert. Die erfindungsgemäßen Iminobis(methylenphosphono)carbonsäurepentaalkylester können meist nicht durch Vakuumdestillation gereinigt werden, fallen aber in für die geplante Verwendung ausreichender Reinheit an. Eine Reinigung kann durch chromatographische Methoden erfolgen.

Die erfindungsgemäßen Iminobis(methylenphosphono)carbonsäurepentaalkylester können vorteilhaft als modifizierendes Lösungsmittel für die Herstellung von nanoteiligen Metallsalzen eingesetzt werden, wobei z.B. ein Metallhalogenid mit einer Säure, z.B. Phosphorsäure oder Borsäure, umgesetzt wird. Die Nanoteilchen zeichnen sich durch eine geringe Teilchengröße und durch eine gezielte Oberflächenfunktionalisierung durch Estergruppen aus. Die durchschnittlichen Durchmesser der Nanoteilchen betragen 1 bis 100 nm.

Ferner können einem speziellen, vorteilhaften Aspekt der vorliegenden Erfindung folgende Verbindungen der Formel IV als Lösungsmittel für die Herstellung von Metallsalznanopartikeln eingesetzt werden: 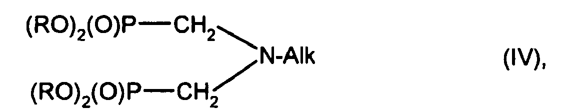 wobei
- R: die oben zu Formel (I) angegebene Bedeutung hat und
- Alk: für einen C₄-C₂₂-Alkylrest oder C₇-C₃₀ Aralkyl- oder Arylalkylrest steht.

Diese an sich bekannten Verbindungen der Formel IV sind durch Erhitzen von Verbindungen der Formel V 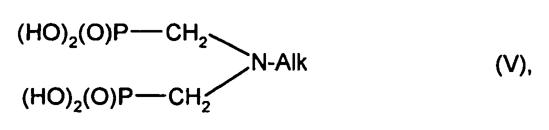 wobei
- Alk: die oben zu Formel (IV) angegebene Bedeutung hat, mit Verbindungen der Formel (III) zugänglich.

Die Verbindungen der Formel V sind durch Reaktion von den Aminen H₂N-Alk mit Phosphoriger Säure und Formaldehyd zugänglich.

Wenn Iminobis(methylenphosphono)carbonsäurepentaalkylester als Modifizierungsreagenz gewählt wird, dann ergibt sich der weitere Vorteil, dass die Nanoteilchen besonders gute Lösungseigenschaften besitzen, und das Größenwachstum der Teilchen kann besonders zuverlässig kontrolliert werden. Außerdem steht die oben genannte weitere, dritte funktionelle Gruppe z.B. als Estergruppe zur weiteren Kopplung je nach Anwendungszweck zur Verfügung.

Ein weiterer Vorteil besteht darin, dass eine im Modifizierungsreagenz enthaltene Carbonylgruppe zuverlässig mit IR- Spektroskopie nachgewiesen werden kann, wodurch ein einfacher Nachweis ermöglicht ist, dass die gewünschte Oberflächenmodifizierung der Nanopartikel auch tatsächlich stattgefunden hat.

Besonders bevorzugt sind Iminobis(methylenphosphono)undecansäurepentaethylester und Iminobis(methylenphosphono)capronsäurepentaethylester.

Die beiden Substanzen koppeln gut an die Oberflächen der Nanopartikel an und sind in den verwendeten Lösungsmitteln löslich, wie sie weiter unten beschrieben sind. Homologe mit ähnlichen Kettenlängen weisen ähnlich gute Eigenschaften aufweisen.

Wie aus der vorangegangenen Zusammenfassung und aus den folgenden Herstellungs- und Anwendungsbeispielen ersichtlich wird, lassen sich mittels der erfinderischen Lehre diverse Nanopartikel gezielt für einen späteren Anwendungszweck synthetisiere, wobei sowohl die Palette an Nanopartikeln sehr divers ist als auch die Palette der anwendungsspezifischen Moleküle, an die die Nanopartikel ankoppeln können.

Ausführungsbeispiele der Erfindung sind in den Zeichnungen dargestellt und in der nachfolgenden Beschreibung näher erläutert.

Es zeigt:
- Fig. 1: eine Schemazeichnung zur Darstellung eines erfindungsgemäß vorge- sehenen Modifizierungsreagenz mit zwei funktionalen Gruppen auf einer Nanopartikeloberfläche.

In Fig. 1 ist im unteren Bereich die Oberfläche eines Nanopartikels 10 schematisch als Linie dargestellt, ohne einzelne Moleküle zu zeigen. Das erfindungsgemäß eingesetzte Modifizierungsreagenz 11 ist hier schematisch am Beispiel eines einzigen Moleküls gezeigt. Es enthält drei wesentliche Bestandteile: Ein Spacer oder Träger 14, der zwei funktionale Gruppen 12 und 16 trägt. Die funktionale Gruppe 12 koppelt an die Nanopartikeloberfläche an, und die funktionale Gruppe 16 ragt weg von der Oberfläche des Nanopartikels. Sie steht für eine anwendungsspezifische Kopplung an weitere Moleküle zur Verfügung, wie es weiter oben bereits erwähnt wurde. Der Spacer 14 ist im Allgemeinen notwendig, damit sich die funktionalen Gruppen nicht gegenseitig in ihrer Wirkung einschränken oder ganz neutralisieren. Die beiden funktionellen Gruppen können durch mindestens eine CH₂-Gruppe (oder ein anderes Brückenatom) miteinander verbunden sein.

In dem in Fig. 1 gezeigten Beispiel können die erwähnten Bestandteile 10, 12, 14, 16 beispielsweise aus folgenden chemischen Substanzen bestehen:
- 10:: Nanopartikeloberfläche mit Phosphatgruppen -P(=O)(-OH)₂
- 12:: Phosphonosäurediethylester -P(=O)(-OCH₂CH₃)₂
- 14:: Alkylkette (CH₂)ₓ, X= I-?
- 16:: Carbonsäureethylester -C(=O)O-CH₂CH₃

Erfindungsgemäß wird damit eine Kopplung des Phosphonsäureesters an die Oberflächenphosphatgruppen unter Ausbildung einer Diphosphonatgruppierung -P(=O)(-OR)-O-P(=O)(-OR)- (Umesterung) erreicht. Alternativ hierzu kann die Phosphatgruppe in die Nanopartikeloberfläche eingebaut werden. Die freie Carbonsäureesterfunktion steht für weitere Reaktionen zur Verfügung.

### Herstellungsbeispiele für Modifizierungsreagenzien:

Im Folgenden werden zunächst Beispiele gegeben für die Herstellung einiger Iminobis(methylenphosphono)carbonsäurepentaalkylester:

### Beispiel 1:

### Herstellung von Iminobis(methylenphosphono)undecansäure:

Man mischt 200 g 11-Aminoundecansäure, 170 g Phosphorige Säure, 200 ml Wasser und 200 ml konzentrierte Salzsäure, erhitzt auf 100°C und gibt innerhalb von 1 h 324 g Formalin (37 %) hinzu. Man rührt noch 1 h bei 100°C, lässt auf Raumtemperatur abkühlen und saugt das ausgefallene Produkt ab. Man erhält 460 g Produkt.

### Beispiel 2:

### Herstellung von Iminobis(methylenphosphono)capronsäure:

Man mischt 131 g 6-Aminocapronsäure, 170 g Phosphorige Säure, 200 ml Wasser und 200 ml konzentrierte Salzsäure, erhitzt auf 100°C und gibt innerhalb von 1 h 324 g Formalin (37 %) hinzu. Man rührt noch 1 h bei 100°C und destilliert das Wasser im Vakuum ab. Man erhält 240 g Produkt.

### Beispiel 3:

### Herstellung von Iminobis(methylenphosphono)undecansäure pentaethylester:

Man erhitzt 100 g des Produktes aus Beispiel 1 mit 1000 g Orthoameisensäuretriethylester 14 h auf Rückfluss. Man filtriert das nicht umgesetzte Edukt ab und destilliert alle bis 140°C bei 5 Torr flüchtigen Bestandteile ab. Man erhält 65 g Produkt (Charakterisierung durch ¹H-NMR-Spektroskopie).

### Beispiel 4:

### Herstellung von Iminobis(methylenphosphono)capronsäurepentaethylester:

Man erhitzt 200 g des Produktes aus Beispiel 2 mit 2000 g Orthoameisensäuretriethylester 13,5 h auf Rückfluss. Man filtriert das nicht umgesetzte Edukt ab und destilliert alle bis 140°C bei 5 Torr flüchtigen Bestandteile ab. Man erhält 148g Produkt (Charakterisierung durch ¹N-NMR-Spektroskopie).

### Beispiel 5:

### Herstellung von Iminobis(methylenphosphono)undecansäurepentaisopropylester:

Man verfährt wie in Beispiel 3 angegeben, wobei 1000 g Orthoameisensäuretriisopropylester als Orthoester eingesetzt wird. Man erhält 163 g Produkt (Charakterisierung durch ¹N-NMR-Spektroskopie).

### Herstellungsbeispiele zur Synthese von modirizierten Nanopartikeln

### 1. Beispiel:

Im Folgenden wird eine Beschreibung einer bevorzugten Ausführungsfbrm für ein erfindungsgemäßes Herstellungsverfahren für die beispielhafte Herstellung von LaPO₄:Ce,Tb Nanopartikeln, modifiziert mit erfindungsgemäß vorgesehenen Phosphonsäuren gegeben:

In einem 50 ml fassenden Hauptkolben mit Intensivkühler, Temperaturfühler und angeschlossenem Heizpilz werden die Salze LaCl₃ 7H₂O (2,4 mmol), CeCl₃ 7H₂O (2,7 mmol) und TbCl₃ (0,9 mmol) in Methanol (ca. 2,5 ml) gelöst und die Lösung anschließend mit Tris-2-ethylhexylphosphat (TEHP) versetzt. Methanol und Kristallwasser werden zunächst bei Raumtemperatur (1-2 h) und anschließend bei 50°C im Vakuum mehrere Stunden entfernt.

In einem zweiten Kolben wird trockene Orthophosphorsäure (6 mmol) in Tetraethylenglycoldimethylether (1,4 ml) gelöst.

In einem dritten Kolben wird die Phosphonsäure 11-Phosphonoundecansäure (1,2 mmol) in TEHP (3-4 ml) gelöst, wobei gegebenenfalls erwärmt werden kann.

Die Salzlösung wird bei 50°C unter Stickstoffatmosphäre mit TEHP (4 ml) verdünnt und mit Trioctylamin (8,0 ml, 18,0 mmol), der Phosphor- sowie der Phosphonsäurelösung versetzt. Anschließend wir 15-18 h auf 200°C erhitzt. Nach Abkühlen der Reaktionsmischung wird diese zur Fällung der Nanopartikel auf Methanol (150 ml) gegossen. Der abgesetzte Niederschlag wird dekantiert und anschließend zentrifugiert. Nach Waschen mit Methanol wird im Vakuum getrocknet.

### 2. Beispiel:

Im Folgenden wird eine Beschreibung einer bevorzugten Ausführungsform für ein erfindungsgemäßes Herstellungsverfahren für die beispielhafte Herstellung von LaPO₄:Ce,Tb Nanopartikeln, modifiziert mit erfindungsgemäß vorgesehenen flüssigen Phosphonsäureestern gegeben:

In einem 50 ml fassenden Hauptkolben mit Intensivkühler, Temperaturfühler und angeschlossenem Heizpilz werden die Salze LaCl₃ 7H₂O (2,4 mmol), CeCl₃ 7H₂O (2,7 mmol) und TbCl₃ (0,9 mmol) in Methanol (ca. 2,5 ml) gelöst und die Lösung anschließend mit Tris-2-ethylhexylphosphat (TEHP) versetzt. Methanol und Kristallwasser wird zunächst bei Raumtemperatur (1-2 h) und anschließend bei 50°C im Vakuum mehrere Stunden entfernt.

In einem zweiten Kolben wird trockene Orthophosphorsäure (6 mmol) in Tetraethylenglycoldimethylether (1,4 ml) gelöst.

In einem dritten Gefäß wird der Phosphonsäureester 11-Phosphonoundecansäuretriethylester (1,35 ml) als 5 % Lösung in TEHP (v/v) angesetzt.

Die Salzlösung wird bei 50°C unter Stickstoffatmosphäre mit TEHP (8 ml) verdünnt und mit Trioctylamin (8,0 ml, 18,0 mmol), der Phosphorsäurelösung und der Phosphonsäurelösung versetzt. Anschließend wir 15-18 h auf 200°C erhitzt. Nach Abkühlen der Reaktionsmischung wird zur Fällung der Nanopartikel auf Methanol (150 ml) gegossen. Der abgesetzte Niederschlag wird dekantiert und anschließend zentrifugiert. Nach Waschen mit Methanol wird im Vakuum getrocknet.

### 3. Beispiel:

Im Folgenden wird eine Beschreibung einer bevorzugten Ausführungsform für ein erfindungsgemäßes Herstellungsverfahren für die beispielhafte Herstellung von LaBO₃:Ce,Th Nanopartikeln, modifiziert mit erfindungsgemäß vorgesehenen Iminobisphosphonsäureester gegeben.

In einem 50 ml fassenden Hauptkolben mit Intensivkühler, Temperaturfühler und angeschlossenem Heizpilz werden die Salze LaCl₃ 7 H₂0 (1,2 mmol), CeCl₃ 7H20 (1,35 mmol) und TbCl₃ (0,45 mmol) in Methanol (ca. 1,2 ml) gelöst und die Lösung anschließend mit Tributylphosphat (TBP) (27 ml) versetzt. Methanol und Kristallwasser werden zunächst bei Raumtemperatur (1-2 h) und anschließend bei 50°C im Vakuum mehrere Stunden entfernt.

Anschließend wird die Salzlösung bei 50°C unter Stickstoffatmosphäre mit Trioctylamin (13,5 mmol) und H₃BO₃ (4,5 mmol) versetzt und auf 200°C erhitzt. Nach 4 h Reaktionszeit wird der Synthesemischung die Iminobis(methylenphosphono)capronsäurepentaethylester (0,275 g, 0,6 mmol) zugesetzt und die Reaktion für weitere 15 h fortgesetzt. Nach Abkühlen der Reaktionsmischung wird diese zur Fällung der Nanopartikel auf Methanol (120 ml) gegossen. Der abgesetzte Niederschlag wird dekantiert und anschließend zentrifugiert. Nach Waschen mit Methanol wird im Vakuum getrocknet.

### 4. Beispiel:

Im Folgenden wird eine Beschreibung einer bevorzugten Ausführungsform für ein erfindungsgemäßes Herstellungsverfahren für die beispielhafte Aminfunktionalisierung der in 2. beschriebenen LaPO₄:Ce,Tb Nanopartikel modifiziert mit erfindungsgemäß vorgesehenen flüssigen Phosphonsäureestern gegeben:

In einem Rundkolben werden die in 2. dargestellten Nanopartikel (17,5 mg, 50 nmol) mit 1,4-Bis(3-Aminopropoxy)-Butan (1,02 g, 5 mmol) auf 150°C erhitzt. Bei ca. 140°C liegt eine optisch klare, leicht gelbliche Dispersion vor. Diese wird für weitere 3 h bei 150°C gerührt und bleibt auch nach Abkühlung auf RT klar. Über Nacht wird gegen 2x2 L 10 mM Na-Carbonatpuffer pH 8,5 dialysiert (Dialyseschlauch Spectra/Por, 5-6.000 MWCO, Spektrum, Niederlande). Das Dialysat ist trübe.

### 5. Beispiel:

Im Folgenden wird eine Beschreibung einer bevorzugten Ausführungsform für ein erfindungsgemäßes Verfahren für die beispielhafte Ankopplung eines Antikörpers gegen aminoterminales Prokollagen Typ III (PIIINP) an in oben unter 4. beschriebene aminofunktionalisierte LaPO₄:Ce,Tb Nanopartikel gegeben:

Die im 4. Beispiel oben dargestellten Nanopartikel (3 mg, 8,4 nmol) werden in TSE-Puffer pH 8,5 (0,04 M NaCl; 0,05 M Triethanolamin-HCl; 0,04 M NaOH; 0,5 mM EDTA; 0,1 % Tween 20; pH 8,5) überführt. Dazu werden die Partikel 3 x 15 Min. bei 3000 g zentrifugiert und der Niederschlag nach Abdekantieren des Überstandes jeweils in 700 µl TSE-Puffer pH 8,5 aufgenommen. Zur Aktivierung der Partikel wird mit einem 40-fachem Überschuss (50 µl einer 20 mM Lösung in Wasser) sulfoSIAB (Sulfosuccinimidyl(4-iodoacetyl)aminobenzoat, Perbio Science Deutschland GmbH, Bonn) für 15 Min. bei 25°C inkubiert. Die Reaktion wird durch Zugabe von 12 µl 1 M Glycin (12-facher Überschuss) gestoppt und das freie sulfo-SIAB durch Zentrifugation (s.o.) abgetrennt.

Der monoklonale Antikörper 35J23 (TSD, Newark, DE, USA) gerichtet gegen PIIINP (aminoterminales Prokollagen Typ III) wird mit einem 30-fachen molaren Überschuss von 2-Iminothiolan (2-IT, Traut's reagent, Perbio Science Deutschland GmbH, Bonn) aktiviert: 10 mg Antikörper 35J23 werden mit Centricon Ultrafiltrationsröhrchen (Ausschlussgröße 50 kD, Millipore, Schwalbach, Deutschland) in TSE8 Buffer überführt (Austauschfaktor 1000, TSE8: (100 mmol Triethanolamin, 50 mmol Natriumchlorid, 1 mmol EDTA in Wasser, pH 8.5). Die Proteinkonzentration wird auf 7-8 mg/mL eingestellt. Zu der Antikörperlösung gibt man 150 µL einer 10 mM Lösung von 2-Imminothiolan in TSE8 Puffer und lässt die Mischung 15 Minuten reagieren. Der so Thiol-aktivierte Antikörper wird wie oben beschrieben bei 4°C mit TSE8 Puffer umgepuffert, um nicht reagierte Aktivatormoleküle zu entfernen und auf 2 mL eingeengt. Die sulfoSIAB aktivierten Nanopartikel und den aktivierten Antikörper enthaltenden Lösungen werden vereinigt und bei Raumtemperatur über Nacht gerührt. Die so erhaltene Dispersion des erweiterten Nachweisteilchen wird von nicht umgesetztem Antikörper durch Zentrifugation wie oben beschrieben abgetrennt.

Im Folgenden wird eine Beschreibung einer bevorzugten Ausführungsform für ein erfindungsgemäßes Nachweisverfahren für aminoterminales Prokollagen Typ III mittels der in oben unter 5. beschriebenen, antikörpergekoppelten LaPO₄:Ce,Tb Nanopartikel gegeben:

Der Assay zur Bestimmung von Prokollagen III in Serumproben zur Diagnose ist ein Sandwich Immunoassay mit biotinylierten monoklonalen Fängerantikörpem und nanopartikel-gekoppelten monoklonalen Antikörpern zur Detektion.

Biotinylierung des monoklonalen Antikörpers MAK P3P 296/3/27 (Dade Behring, Marburg) gerichtet gegen aminoterminales Prokollagen Typ III: Der Antikörper wird in 0,1 M Carbonat-Puffer pH 8,5 in einer Konzentration von 1 mg/ml gelöst und mit einem 20-fach molaren Überschuss von in Wasser gelöstem Biotin-X-NHS (Sulfo-Biotin-Aminocapronsäure-N-Hydroxy-Succinimid-Ester, Calbiochem, Schwalbach) für 4 Std. bei RT rotierend inkubiert. Anschließend wird gegen PBS-Puffer (8 mM K₂HPO₄; 150 mM NaCl; 2 mM Na₂HPO₄; pH 7,4) dialysiert (Dialyseschlauch Spectra/Por, 5-6.000 MWCO, Spektrum, Niederlande).

Immunoassay: 1 µg des in oben unter 5. beschriebenen Nanopartikel-Konjugates werden mit 0,65 µg des biotinylierten Antikörpers MAK P3P 296/3/27 in Anwesenheit von PIIINP Kalibratoren (aus fötalem Rinderserum, Konzentrationen: 0; 5,2; 9,6; 21; 57 und 151 ng/ml) in einem Volumen von 100 µl in PBS Puffer mit 0,1 % BSA bei 37°C für 1 h inkubiert, anschließend in Streptavidin-beschichteten Microtiterplatten (BD BioCoat Streptavidin Assay Plates, BD GmbH Heidelberg) gegeben und für weitere 15 min bei 37°C inkubiert. Nach 3-maligem Waschen mit jeweils 200 µl PBS / 0,1 % BSA wird die Microtiterplatte in einem Tecan SAFIRE Monochromator Plattenleser (Tecan GmbH, Crailsheim, Deutschland) mit folgenden Einstellungen ausgelesen: Anregungswellenlänge: 280 nm (10 nm Spaltbreite); Emissionswellenlängen-Scan von 450 - 650 nm (10nm Spaltbreite); Zeitverzögerung (time delay): 40 µs und Zeitfenster (time window): 2000 µs. Für jeden Wert wird eine Doppelbestimmung durchgeführt. Die gemessenen Werte werden gegen die eingesetzten Kalibrator-Konzentrationen in einem Diagramm aufgetragen und ergeben eine Eichkurve, anhand derer Konzentrationen von PIIINP, die in analoger Weise in humanen Serumproben gemessen werden, bestimmt werden können.

Obwohl die vorliegende Erfindung anhand von bevorzugten Ausführungsbeispielen vorstehend beschrieben wurde, ist sie darauf nicht beschränkt, sondern auf vielfältige Weise modifizierbar.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

## Patentansprüche

1. Verfahren zur Herstellung von Metallsalznanopartikeln in einer Flüssigphasenreaktion, bei der die Nanopartikel in einer Synthesemischung synthetisiert werden und während einer Synthesezeitspanne wachsen, **gekennzeichnet durch** das Hinzugeben eines Modifizierungsreagenz zu der Synthesemischung innerhalb der Synthesezeitspanne, wobei als Modifizierungsreagenz ein Iminobis(methylenphosphono)carbonsäurepentaalkylester der Formel I verwendet wird: 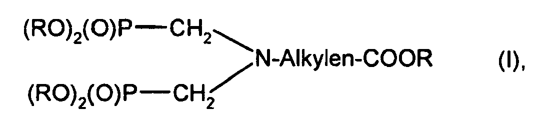 wobei
R einen C₁-C₄-Alkylrest und
Alkylen einen C₁-C₂₂-Alkylenrest oder C₇-C₂₀-Alkylenarylenrest, vorzugsweise einen C₅-C₁₇-Alkylenrest, der linear oder verzweigt sein kann und zusätzlich als weitere Substituenten Halogenatome, COOR-Gruppen, Alkoxygruppen, Bis(dialkoxyphosphorylmethyl)aminogruppen oder Arylreste tragen kann, darstellt.

2. Verfahren nach Anspruch 1, wobei als Modifizierungsreagenz ein Iminobis(methylenphosphono)undecansäurepentaethylester oder -pentaisopropylester verwendet wird.

3. Verfahren nach Anspruch 1, wobei als Modifizierungsreagenz ein Iminobis(methylenphosphono)capronsäurepentaethylester oder -pentaisopropylester verwendet wird.

4. Verfahren nach den vorstehenden Ansprüchen 1 bis 3, wobei die Zugabe des Modifizierungsreagenz während der Synthesezeitspanne umso später erfolgt, je größer die geplante, durchschnittliche Größe der Nanopartikel ist.

5. Verfahren nach Anspruch 1, wobei es sich bei den Metallsalznanopartikeln um Substanzen ausgewählt aus der Reihe der Halogenide, der Erdalkalisulfate, der Phosphate und Halophosphate, der Borate, der Vanadate, der Aluminate, der Silikate, der Wolframate, der Molybdate, der Germanate, handelt, die alle auch zusätzlich noch mit einem oder mehreren Elementen der Lanthaniden und/oder Mn, Ag, Cu, Pb, Bi, Cr, Sn, Sb dotiert sein können.

6. Verfahren nach Anspruch 1, wobei es sich bei den Metallsalznanopartikeln um Substanzen ausgewählt aus der Reihe
a) XY₂ (X = Mg, Ca, Sr, Ba; Y = F, Cl, I), CaF₂:Eu (II), BaF₂:Eu; BaMgF₄:Eu; LiBaF₃:Eu; SrF₂:Eu; SrBaF₂Eu; CaBr₂:Eu-SiO₂; CaCl₂:Eu; CaCl₂:Eu-SiO₂; CaCl₂:Eu,Mn-SiO₂; Cal₂:Eu; Cal₂Eu,Mn; KMgF₃:Eu; SrF₂ :Eu (II), BaF₂:Eu (II), YF₃, NaYF₄,
b) XSO₄ (X = Mg, Ca, Sr, Ba), SrSO₄:Eu, SrS04:Eu,Mn, BaSO₄:Eu, BaSO₄:Eu,Mn, CaSO₄, CaSO₄:Eu, CaSO₄:Eu,Mn, sowie jeweils gemischte Erdalkalisulfate, auch in Kombination mit Magnesium, z.B. Ca,MgSO₄:Eu,Mn,
c) CaPO₄:Ce,Mn, Ca₅(PO₄)₃Cl:Ce,Mn, Ca₅(PO₄)₃F:Ce,Mn, SrPO₄:Ce,Mn, Sr₅(PO₄)₃Cl:Ce,Mn, Sr₅(PO₄)₃F:Ce,Mn, dieses auch mit Eu (II) und Eu,Mn codotiert, α-Ca₃(PO₄)₂:Eu; β-Ca₃(PO₄)₂:Eu, Mn; Ca₅(PO₄)₃Cl:Eu; Sr₅(PO₄)₃Cl:Eu; Ba₁₀(PO₄)₆Cl:Eu; Ba₁₀(PO₄)₆Cl:Eu,Mn, Ca₂Ba₃(PO₄)₃Cl:Eu; Ca₅(PO₄)₃F:Eu²⁺X³⁺; Sr₅(POₐ)₃F:Eu²⁺X³⁺(X=Nd, Er, Ho, Tb); Ba₅(PO₄)₃Cl:Eu; β-Ca₃(PO₄)₂:Eu; CaB₂P₂O₉:Eu; CaB₂P₂O₉:Eu; Ca₂P₂O₇:Eu; Ca₂P₂O₇:Eu, Mn; Sr₁₀(PO₄)₆Cl₂:Eu; (Sr, Ca, Ba, Mg)₁₀(PO₄)₆Cl₂:Eu; LaPO₄:Ce; CePO₄,
d) LaBO₃; LaBO₃:Ce; ScBO₃:Ce YAlBO₃:Ce; YBO₃:Ce; Ca₂B₅O₉Cl:Eu; xEuOyNa₂O·zB₂O₃
e) YVO₄, YVO₄:Eu, YVO₄:Dy, YVO₄:Sm YVO₄:Bi; YVO₄:Bi,Eu, YVO₄:Bi,Dy, YVO₄:Bi,Sm, YVO₄:Tm, YVO₄:Bi,Tm GdVO₄, GdVO₄:Eu, GdVO₄:Dy, GdVO₄:Sm GdVO₄:Bi; GdVO₄:Bi,Eu, GdVO₄:Bi,Dy, GdVO₄:Bi,Sm.
f) MgAl₂O₄:Eu; CaAl₂O₄:Eu; SrAl₂O₄:Eu; BaAl₂O₄:Eu; LaMgAl₁₁O₁₉:Eu; BaMgAl₁₀O₁₇:Eu; BaMgAl₁₀O₁₇:Eu, Mn; CaAl₁₂O₁₉:Eu; SrAl₁₂O₁₉:Eu; SrMgAl₁₀O₁₇:Eu; Ba(Al₂O₃)₆:Eu; (Ba, Sr)MgAl10O₁₇:Eu, Mn; CaAl₂O₄:Eu,Nd; SrAl₂O₄:Eu, Dy; Sr₄Al₁₄O₂₅:Eu, Dy,
g) BaSrMGSi₂O₇:Eu; Ba₂MgSiO₇:Eu; BaMg₂Si₂O₇:Eu; CaMgSi₂O₆:Eu; SrBaSiO₄:Eu; SrSi₃O₈.SrCl₂:Eu; Ba₅SiO₄Br₆:Eu; Ba₅SiO₄Cl₆:Eu; Ca₂MgSi₂O₇:Eu; CaAl₂Si₂O₈:Eu; Ca_{1.5}Sr_{0.5}MgSi₂O₇:Eu; (Ca, Sr)₂MgSi₂O₇:Eu, Sr₂LiSiO₄F:Eu,
h) X₃WO₆ (X = Mg, Ca, Sr, Ba)" X₂WO₄ (X = Li, Na, K, Rb, Cs), XMoO₄ (X = Mg, Ca, Sr, Ba) sowie Polymolybdate oder Polywolframate bzw. die Salze der entsprechenden Hetero- oder Isopolysäuren
i) Zn₂GeO₄
j) folgenden Verbindungen: ALnO₂:Yb, Er (A=Li, Na; Ln=Gd, Y, Lu); Ln₂O₃:Yb, Er (Ln=La, Gd, Y, Lu); LnAO₄:Yb, Er (Ln=La, Y; A=P, V, As, Nb); Ca₃Al₂Ge₃O₁₂:Er; Gd₂O₂S:Yb, Er; La₂S:Yb, Er.
handelt, die alle auch zusätzlich noch mit einem oder mehreren Elementen der Lanthaniden und/oder Mn, Ag, Cu, Pb, Bi, Cr, Sn, Sb dotiert sein können.

7. Verfahren nach Anspruch 5 oder 6, wobei die Konzentration der Dotierungselemente im Wirtsgitter zwischen 10-⁵ mol.-% und 50 mol.-%, bevorzugt zwischen 0,01 mol.-% und 30 mol.-%, besonders bevorzugt zwischen 0,1 mol.% und 20 mol.-% beträgt.

8. Modifizierte Nanopartikel erhältlich nach einem der Ansprüche 1 bis 7.

9. Verwendung der Nanopartikel nach Anspruch 8 zur Ankoppelung an biologisch relevante Moleküle zum Zwecke deren Kennzeichnung.

10. Iminobis(methylenphosphono)carbonsäurepentaalkylester der Formel I: 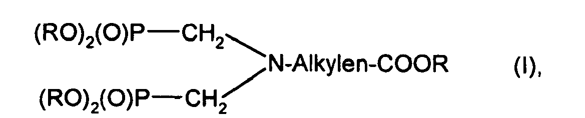 wobei
R einen C₁-C₄-Alkylrest und
Alkylen einen C₇-C₂₀-Alkylenarylenrest oder einen C₅-C₁₇-Alkylenrest, der linear oder verzweigt sein kann und zusätzlich als weitere Substituenten Halogenatome, COOR-Gruppen, Alkoxygruppen, Bis(dialkoxyphosphorylmethyl)aminogruppen oder Arylreste tragen kann, darstellt.

## Claims

1. Process for preparing metal salt nanoparticles in a liquid phase reaction, in which the nanoparticles are synthesized in a synthesis mixture and grow during a synthesis period, **characterized by** the adding of a modifying reagent to the synthesis mixture within the synthesis period, wherein use is made, as modifying reagent, of a pentaalkyl iminobis(methylenephosphono)-carboxylate of the formula I: 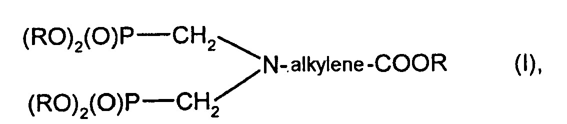 where
R is a C₁-C₄-alkyl radical, and
alkylene is a C₁-C₂₂-alkylene radical or C₇-C₂₀-alkylenearylene radical, preferably a C₅-C₁₇-alkylene radical, which can be linear or branched and can, in addition, carry, as additional substituents, halogen atoms, COOR groups, alkoxy groups, bis(dialkoxyphosphorylmethyl)amino groups or aryl radicals.

2. Process according to Claim 1, wherein use is made, as modifying reagent, of a pentaethyl or a pentaisopropyl iminobis(methylenephosphono)undecanoate.

3. Process according to Claim 1, wherein use is made, as modifying reagent, of a pentaethyl or pentaisopropyl iminobis(methylenephosphono)caproate.

4. Process according to the preceding Claims 1 to 3, wherein the time which elapses during the synthesis period before the modifying reagent is added is directly proportional to the planned average size of the nanoparticles.

5. Process according to Claim 1, wherein the metal salt nanoparticles are substances which are selected from the series comprising the halides, the alkaline earth metal sulfates, the phosphates and halophosphates, the borates, the vanadates, the aluminates, the silicates, the tungstates, the molybdates and the germanates, all of which can also, in addition, be doped with one or more elements of the lanthanides and/or Mn, Ag, Cu, Pb, Bi, Cr, Sn or Sb.

6. Process according to Claim 1, wherein the metal salt nanoparticles are substances selected from the series
a) XY₂ (X = Mg, Ca, Sr, Ba; Y = F, Cl, I), CaF₂:Eu(II), BaF₂:Eu; BaMgF₄:Eu; LiBaF₃:Eu; SrF₂:Eu; SrBaF₂Eu; CaBr₂:Eu-SiO₂; CaCl₂Eu; CaCl₂:Eu-SiO₂; CaCl₂:Eu,Mn-SiO₂; Cal₂:Eu; Cal₂Eu,Mn; KMgF₃:Eu; SrF₂:Eu(II), BaF₂:Eu(II), YF₃, NaYF₄,
b) XSO₄ (X = Mg, Ca, Sr, Ba), SrSO₄:Eu, SrSO₄:Eu,Mn, BaSO₄:Eu, BaSO₄:Eu,Mn, CaSO₄, CaSO₄:Eu, CaSO₄:Eu,Mn, and also in each case mixed alkaline earth metal sulfates, including those in combination with magnesium, e.g. Ca,MgSO₄:Eu,Mn,
c) CaPO₄:Ce,Mn, Caₛ(Po₄)₃Cl:Ce,Mn, Ca₅(PO₄)₃F:Ce,Mn, SrPO₄:Ce,Mn, Sr₅(PO₄)₃Cl:Ce,Mn, Sr₅(PO₄)₃F:Ce,Mn, this also codoped with Eu(II) and Eu,Mn, α-Ca₃(PO₄)₂:Eu; β-Ca₃(PO₄)₂:Eu,Mn; Ca₅(PO₄)₃Cl:Eu; Sr₅(PO₄)₃Cl:Eu; Ba₁₀(PO₄)₆Cl:Eu; Ba₁₀(PO₄)₆Cl:Eu,Mn, Ca₂Ba₂(PO₄)₃Cl:Eu; Ca₅(PO₄)₃F:Eu²⁺X³⁺; Sr₅(PO₄)₃F:Eu²⁺X³⁺(X=Nd, Er, Ho, Tb); Ba₅(PO₄)₃Cl:Eu; β-Ca₃(PO₄)₂:Eu; CaB₂P₂O₉:Eu; CaB₂P₂O₉:Eu; Ca₂P₂O₇:Eu; Ca₂P₂O₇:Eu,Mn; Sr₁₀(PO₄)₆Cl₂:Eu; (Sr, Ca, Ba, Mg)₁₀(PO₄)₆Cl₂:Eu; LaPO₄:Ce; CePO₄,
d) LaBO₃; LaBO₃:Ce; ScBO₃:Ce YAlBO₃:Ce; YBO₃:Ce; Ca₂B₅O₉Cl:Eu; xEuOyNa₂OzB₂O₃
e) YVO₄, YVO₄:Eu, YVO₄:Dy, YVO₄:Sm, YVO₄:Bi; YVO₄:Bi,Eu, YVO₄:Bi,Dy, YVO₄:Bi,Sm, YVO₄:Tm, YVO₄:Bi,Tm, GdVO₄, GdVO₄:Eu, GdVO₄:Dy, GdVo₄:Sm, GdVO₄:Bi; GdVO₄:Bi,Eu, GdVO₄:Bi,Dy, GdVO₄:Bi,Sm.
f) MgAl₂O₄:Eu; CaAl₂O₄:Eu; SrAl₂O₄:Eu; BaAl₂O₄:Eu; LaMgAl₁₁O₁₉:Eu; BaMgAl₁₀O₁₇:Eu; BaMgAl₁₀O₁₇:Eu, Mn; CaAl₁₂O₁₉:Eu; SrAl₁₂O₁₉:Eu; SrMgAl₁₀O₁₇:Eu; Ba(Al₂O₃)₆:Eu; (Ba,Sr)MgAl₁₀O₁₇:Eu, Mn; CaAl₂O₄:Eu,Nd; SrAl₂O₄:Eu, Dy: Sr₄Al₁₄O₂₅:Eu,Dy,
g) BaSrMgSi₂O₇:Eu; Ba₂MgSiO₇:Eu; BaMg₂Si₂O₇:Eu; CaMgSi₂O₆:Eu; SrBaSiO₄:Eu; Sr₂Si₃O₈.SrCl₂:Eu; Ba₅SiO₄Br₆:Eu; Ba₅SiO₄Cl₆:Eu; Ca₂MgSi₂O₇:Eu; CaAl₂Si₂O₈:Eu; Ca_{1.5}Sr_{0.5}MgSi₂O₇:Eu; (Ca,Sr)₂MgSi₂O₇:Eu, Sr₂LiSiO₄F:Eu,
h) X₃WO₆ (X = Mg, Ca, Sr, Ba), X₂WO₄ (X = Li, Na, K, Rb, Cs), XMoO₄ (X = Mg, Ca, Sr, Ba) and also polymolybdates or polytungstates and/or the salts of the corresponding hetero- or isopoly acids
i) Zn₂GeO₄
j) the following compounds: ALnO₂:Yb, Er (A = Li, Na; Ln = Gd, Y, Lu); Ln₂O₃:Yb, Er (Ln = La, Gd, Y, Lu); LnAO₄:Yb, Er (Ln = La, Y; A = P, V, As, Nb); Ca₃Al₂Ge₃Oₗ₂:Er; Gd₂O₂S:Yb, Er; La₂S:Yb,Er.
all of which can also, in addition, be doped with one or more elements of the lanthanides and/or Mn, Ag, Cu, Pb, Bi, Cr, Sn or Sb.

7. Process according to Claim 5 or 6, wherein the concentration of the doping elements in the host lattice is between 10⁻⁵ mol% and 50 mol%, preferably between 0.01 mol% and 30 mol%, particularly preferably between 0.1 mol% and 20 mol%.

8. Modified nanoparticles obtainable according to any one of Claims 1 to 7.

9. Use of the nanoparticles according to Claim 8 for coupling to biologically relevant molecules for the purpose of marking them.

10. Pentaalkyl iminobis(methylenephosphono)carboxylates of the formula I: 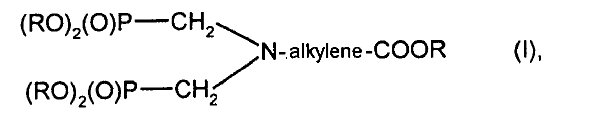 where
R is a C₁-C₄-alkyl radical and
alkylene is a C₇-C₂₀-alkylenearylene radical or a C₅-C₁₇-alkylene radical, which can be linear or branched and can, in addition, carry, as additional substituents, halogen atoms, COOR groups, alkoxy groups, bis(dialkoxyphosphorylmethyl)amino groups or aryl radicals.

## Revendications

1. Procédé pour la préparation de nanoparticules de sels métalliques dans une réaction en phase liquide, où les nanoparticules sont synthétisées dans un mélange de synthèse et croissent pendant un laps de temps de synthèse, **caractérisé par** l'addition d'un réactif de modification au mélange de synthèse pendant le laps de temps de synthèse, où on utilise comme réactif de modification un ester penta-alkylique d'un acide iminobis(méthylènephosphono)carboxylique de formule I : 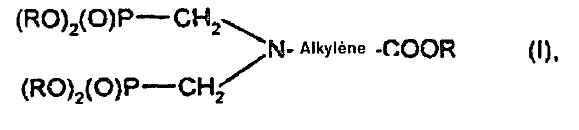 où
R représente un radical alkyle en C₁-C₄ et
Alkylène représente un radical C₁-C₂₂-alkylène ou C₇-C₂₀-alkylênearylène, de préférence un radical C₅-C₁₇-alkylène, qui peut être linéaire ou ramifié et qui peut porter en outre, comme autres substituants, des atomes d'halogène, des groupes COOR, des groupes alcoxy, des groupes bis(dialcoxyphosphorylméthyl)amino ou des radicaux aryle.

2. Procédé selon la revendication 1, où on utilise comme réactif de modification un ester penta-éthylique ou un ester penta-isopropylique de l'acide iminobis(méthylènephosphono)undécanoïque.

3. Procédé selon la revendication 1, où on utilise comme réactif de modification un ester penta-éthylique ou un ester penta-isopropylique de l'acide iminobis(méthylènephosphono)caproïque.

4. Procédé selon l'une quelconque des revendications précédentes 1 à 3, où l'addition du réactif de modification pendant le laps de temps de synthèse est réalisée d'autant plus tard que la taille moyenne planifiée des nanoparticules est grande.

5. Procédé selon la revendication 1, où il s'agit, pour les nanoparticules de sels métalliques, de substances de la série des halogénures, des sulfates de métal alcalino-terreux, des phosphates et des halogénophosphates, des borates, des vanadates, des aluminates, des silicates, des tungsténates, des molybdates, des germanates, qui peuvent également tous encore être dopés avec un ou plusieurs éléments des lanthanides et/ou par Mn, Ag, Cu, Pb, Bi, Cr, Sn, Sb.

6. Procédé selon la revendication 1, où il s'agit, pour les nanoparticules de sels métalliques de substances choisies dans la série
a) XY₂ (X = Mg, Ca, Sr, Ba ; Y = F, Cl, I), CaF₂:Eu (II), BaF₂:Eu ; BaMgF₄:Eu ; LiBaF₃:Eu ; SrF₂:Eu ; SrBaF₂Eu ; CaBr₂:Eu-SiO₂ ; CaCl₂ : Eu ; CaCl₂:Eu-SiO₂ ; CaCl₂ : Eu, Mn-SiO₂ ; CaI₂:Eu ; CaI₂Eu, Mn ; KMgF₃:Eu ; SrF₂:Eu(II), BaF₂:Eu (II), YF₃, NaYF₄,
b) XSO₄ (X = Mg, Ca, Sr, Ba), SrSO₄:Eu, SrSO₄:Eu,Mn, BaSO₄:Eu, BaSO₄:Eu, Mn, CaSO₄, CaSO₄:Eu, CaSO₄:Eu, Mn, ainsi qu'à chaque fois les sulfates de métal alcalino-terreux mixtes, également en combinaison avec du magnésium, par exemple Ca,MgSO₄:Eu,Mn,
c) CaPO₄:Ce,Mn, Ca₅(PO₄)₃Cl:Ce,Mn, Ca₅(PO₄)₃F:Ce,Mn, SrPO₄:Ce,Mn, Sr₅(PO₄)₃Cl:Ce,Mn, Sr₅(PO₄)₃F:Ce,Mn, celui-ci également sous forme codopée avec Eu(II) et Eu,Mn, α-Ca₃(PO4)₂:Eu ; β-Ca₃(PO₄)2:Eu,Mn ; Ca₅(PO₄)₃Cl:Eu ; Sr₅(PO₄)₃Cl:Eu ; Ba₁₀₍PO4)₆cl:Eu ; Ba₁₀ (PO₄)₆Cl. Eu, Mn, Ca₂Ba₃ (PO₄)₃Cl: Eu ; Ca₅(PO₄)₃F:Eu²⁺X³⁺ ; Sr₅(PO₄)₃F:Eu²⁺X³⁺(X = Nd, Er, Ho, Tb) ; Ba₅(PO₄)₃Cl:Eu ; β-Ca₃(PO₄)₂:Eu ; CaB_{z}P₂O₉:Eu ; CaB₂P₂O₉:Eu ; Ca₂P₂O₇:Eu ; Ca₂P₂O₇:Eu,Mn ; Sr₁₀(PO₄)₆Cl2:Eu ; (Sr, Ca, Ba, Mg)₁₀(PO₄)₆Cl₂:Eu; LaPO₄:Ce ; CePO₄,
d) LaBO₃ ; LaBO₃ : Ce ; ScBO₃:Ce YAlBO₃:Ce ; YBO₃:Ce ; Ca₂B₅O₉Cl : Eu ; xEuO yNa₂O zB₂O₃
e) YV0₄, YVO₄:Eu, YVO₄:Dy, YVO₄:Sm YVO₄:Bi ; YVO₄:Bi,Eu, YVO₄:Bi,Dy, YVO₄:Bi,Sm, YVO4:Tm, YVO₄: Bi , Tm GdVO₄, GdVO₄:Eu, GdVO₄:Dy, GdVO₄:Sm GdVO₄:Bi ; GdVO₄:Bi,Eu , GdVO₄:Bi,Dy, GdVO₄:Bi,Sm.
f) MgAl₂O4:Eu ; CaAl₂O4:Eu ; SrAl₂O4:Eu ; BaAl₂O₄:Eu ; LaMgAl₁₀O₁₉:Eu BaMgAl₁₀O₁₇:Eu ; BaMgAl₁₀O₁₇:Eu,Mn ; CaAl₁₂O₁₉:Eu ; SrAl₁₂O₁₉:Eu ; SrMgAl₁₀O₁₇:Eu ; Ba(Al₂O3)₆:Eu ; (Ba,Sr)MgAl₁₀O₁₇:Eu, Mn ; CaAl₂O₄:Eu,Nd ; SrAl₂O₄:Eu, Dy ; Sr₄Al₁₄O₂₅ : Eu, Dy,
g) BaSrMGSi₂O₇:Eu ; Ba₂MgSiO₇:Eu ; BaMg₂Si₂O₇:Eu ; CaMgSi₂O₆:Eu; SrBaSiO₄:Eu ; Sr₂Si₃O₈.SrCl₂:Eu ; Ba₅SiO₄Br₆:Eu ; Ba₅SiO₄Cl₆:Eu ; Ca₂MgSi₂O₇:Eu ; CaAl₂Si₂O₈:Eu; Ca_{1,5}Sr_{0,5}MgSi₂O₇:Eu (Ca,Sr)₂MgSi₂O₇:Eu, Sr₂LiSiO₄F:Eu,
h) X₃WO₆ (X = Mg, Ca, Sr, Ba), X₂WO₄ (X = Li, Na, K, Rb, Cs), XMoO₄ (X = Mg, Ca, Sr, Ba) ainsi que les polymolybdates ou les polytungsténates ou les sels des hétéropolyacides ou isopolyacides correspondants,
i) Zn₂GeO₄
j) les composés suivants : ALnO₂:Yb, Er (A=Li, Na ; Ln=Gd, Y, Lu) ; Ln₂O₃:Yb, Er (Ln=La, Gd, Y, Lu) ; LnAO₄:Yb, Er (Ln=La, Y ; A=P, V, As, Nb) ; Ca₃Al₂Ge₃O₁₂:Er ; Gd₂O₂S b, Er ; La₂S Yb, Er,
qui peuvent tous également encore être dopés en plus avec un ou plusieurs éléments des lanthanides et/ou Mn, Ag, Cu, Pb, Bi, Cr, Sn, Sb.

7. Procédé selon la revendication 5 ou 6, où la concentration en éléments de dopage dans le réseau hôte est située entre 10⁻⁵% en mole et 50% en mole, de préférence entre 0,01% en mole et 30% en mole, de manière particulièrement préférée entre 0,1% en mole et 20% en mole.

8. Nanoparticules modifiées pouvant être obtenues selon l'une quelconque des revendications 1 à 7.

9. Utilisation des nanoparticules selon la revendication 8 pour le couplage sur des molécules biologiquement importantes en vue de leur caractérisation.

10. Esters penta-alkyliques d'un acide iminobis(méthylènephosphono)carboxylique de formule I : 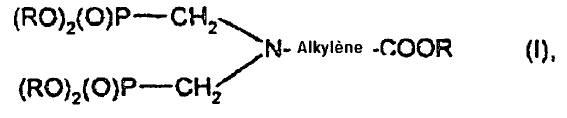 où
R représente un radical alkyle en C₁-C₄ et
alkylène représente un radical C₇-C₂₀-alkylène ou C₅-C₁₇-alkylènearylène, qui peut être linéaire ou ramifié et qui peut porter en outre, comme autres substituants, des atomes d'halogène, des groupes COOR, des groupes alcoxy, des groupes bis(dialcoxyphosphorylméthyl)amino ou des radicaux aryle.
